(19) Europäisches Patentamt
European Patent Office
Office européen des brevets

(11) **EP 4 243 137 A1**

(12) **EUROPEAN PATENT APPLICATION**
published in accordance with Art. 153(4) EPC

(43) Date of publication:
**13.09.2023 Bulletin 2023/37**

(21) Application number: **22862811.1**

(22) Date of filing: **17.06.2022**

(51) International Patent Classification (IPC):
**H01M 10/04** (2006.01)  **H01M 10/052** (2010.01)
**H01M 10/0587** (2010.01)

(52) Cooperative Patent Classification (CPC):
**H01M 4/139; H01M 10/04; H01M 10/052;
H01M 10/0587;** Y02E 60/10; Y02P 70/50

(86) International application number:
**PCT/CN2022/099571**

(87) International publication number:
**WO 2023/029670 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.08.2021  CN 202111007739**

(71) Applicant: **Contemporary Amperex Technology
Co., Limited
Ningde, Fujian 352100 (CN)**

(72) Inventors:
- **ZHANG, Xiaowei
Ningde, Fujian 352100 (CN)**
- **ZHANG, Wei
Ningde, Fujian 352100 (CN)**
- **WEN, Yuqian
Ningde, Fujian 352100 (CN)**
- **TANG, Minghao
Ningde, Fujian 352100 (CN)**
- **ZHANG, Shengwu
Ningde, Fujian 352100 (CN)**
- **NI, Jun
Ningde, Fujian 352100 (CN)**

(74) Representative: **Rowlands, Stuart Michael
Maucher Jenkins
Seventh Floor Offices
Artillery House
11-19 Artillery Row
London SW1P 1RT (GB)**

(54) **WINDING NEEDLE FIXING APPARATUS, WINDING DEVICE, AND PREPARATION METHOD FOR ELECTRODE ASSEMBLY**

(57)    The present application discloses a winding needle fixing apparatus, a winding device, and a preparation method for an electrode assembly. The winding needle fixing apparatus comprises a clamping mechanism and a stretching mechanism. The clamping mechanism is used for clamping or loosening an end of a winding needle. The stretching mechanism is connected to the clamping mechanism, and is configured to apply a pulling force to the clamping mechanism when the clamping mechanism clamps the end of the winding needle, so as to apply the pulling force to the winding needle. The technical solution provided by the present application can allow the winding needle to have a faster winding speed, thereby improving the production efficiency of the electrode assembly.

FIG. 5

**Description**

Cross-Reference to Related Applications

The present application claims the priority of Chinese patent application no. 202111007739.1, entitled "WINDING SHAFT FIXTURE, WINDING DEVICE, AND METHOD FOR PREPARING ELECTRODE ASSEMBLY" and filed on August 30, 2021, which is incorporated herein by reference in its entirety.

Technical Field

The present application relates to the field of battery production technology, and in particular, to a winding shaft fixture, a winding device, and a method for preparing an electrode assembly.

Background Art

Achieving energy conservation and emission reduction is the key to the sustainable development of the automotive industry. Electric vehicles have become an important part of the sustainable development of the automotive industry due to their advantages in energy conservation and being environmentally friendly. For electric vehicles, battery technology is an important factor in their development.

In battery production, a wound electrode assembly is formed by winding an electrode plate and a separator by means of a winding shaft, and the winding speed directly affects the production efficiency of the electrode assembly and a battery. However, in the prior art, it is easy to produce unqualified electrode assemblies by simply increasing the winding speed.

Summary of the Invention

In view of the above problem, embodiments of the present application provide a winding shaft fixture, a winding device, and a method for preparing an electrode assembly, which can allow a winding shaft to have a higher winding speed to improve the production efficiency of the electrode assembly.

In a first aspect, the present invention provides a winding shaft fixture, including: a clamping mechanism for clamping or releasing an end of a winding shaft; and a tensioning mechanism connected to the clamping mechanism, the tensioning mechanism being configured to apply a pulling force to the clamping mechanism when the clamping mechanism clamps the end of the winding shaft, so as to apply the pulling force to the winding shaft.

In the technical solution of the embodiments of the present application, one end of the winding shaft is mounted on a mounting base and the other end thereof is clamped by the clamping mechanism; when the clamping mechanism clamps the end of the winding shaft, the tensioning mechanism applies a pulling force to the clamping mechanism so as to apply the pulling force to the end of the winding shaft by means of the clamping mechanism to tension the winding shaft, thereby reducing the deflection deformation of the winding shaft, ensuring the winding quality of the electrode assembly, and allowing the winding speed to be increased to improve the production efficiency of the electrode assembly.

In some embodiments, the clamping mechanism includes: a housing having an opening for the winding shaft to extend through; and a clamping assembly provided in the housing and rotatably connected to the housing about an axis of the winding shaft, the clamping assembly being used to clamp or release the end of the winding shaft; where the tensioning mechanism is connected to the housing.

The end of the winding shaft extends into the housing through the opening and is clamped by the clamping assembly, and the tensioning mechanism pulls the housing to tension the winding shaft. Since the clamping assembly is arranged to be rotatably connected to the housing about the axis of the winding shaft, the clamping assembly may actively rotate to match the rotation of the winding shaft or may be driven to rotate by the winding shaft, and the housing and the tensioning mechanism are not required to rotate with the winding shaft, so that manufacturing cost of the winding shaft fixture and operation cost for winding can be effectively reduced.

In some embodiments, the clamping assembly includes a transmission member and a plurality of clamping members, the plurality of clamping members being distributed about the axis of the winding shaft, and each of the clamping members being in wedged fit with the transmission member; and the clamping mechanism further includes: a first drive unit provided in the housing, the first drive unit being used to drive the transmission member to move in an axial direction of the winding shaft, so that the plurality of clamping members are closed in a radial direction of the winding shaft to clamp the end of the winding shaft.

When the first drive unit is operated to drive the transmission member to move along the axis of the winding shaft, due to a wedged fit between the transmission member and the clamping members, the transmission member can effectively drive all the clamping members to radially close, and a clamping force of the clamping members to the end of the winding shaft can be ensured. Moreover, transmission between the transmission member and the clamping members described above is carried out in a simple way, which can ensure the power transmission efficiency and reduce the difficulty of designing the transmission member and the clamping members.

In some embodiments, the clamping assembly further includes a base, the base being rotatably mounted in the housing about the axis of the winding shaft, and the transmission member being movably mounted on the base in the axial direction of the winding shaft.

The base capable of rotating about the axis of the winding shaft is provided, so that the transmission member can not only move along the axis of the winding shaft, but can also rotate about the axis of the winding shaft, so as to synchronously rotate with the winding shaft.

In some embodiments, the transmission member passes through the base in the axial direction of the winding shaft, one end of the transmission member is in wedged fit with the plurality of clamping members, and the other end of the transmission member is connected to the first drive unit.

The transmission member is located between the clamping member and the first drive unit in the axial direction of the winding shaft, so that the transmission member can be driven by the first drive unit to drive the clamping members to close in the radial direction of the winding shaft in a shortest path, so as to quickly clamp the winding shaft. Moreover, the clamping members, the transmission member and the first drive unit are arranged in the axial direction of the winding shaft, which facilitates the spatial arrangement of the individual structures in the clamping mechanism.

In some embodiments, the base is provided with a plurality of guide grooves, the plurality of guide grooves are distributed at intervals in a circumferential direction of the base, and each of the guide grooves extends in an axial direction of the base; and the transmission member includes a connecting portion and a plurality of transmission portions, the transmission portions are arranged corresponding to the guide grooves, each of the transmission portions is slidably provided in the corresponding guide groove, one end of each transmission portion is in wedged fit with the corresponding clamping member, the other end of each transmission portion is connected to the connecting portion, and the connecting portion is connected to the first drive unit.

The plurality of transmission portions are slidably provided in the corresponding guide grooves, and with the connecting portion, the first drive unit can drive all the transmission portions to slide simultaneously, so that all the clamping members are synchronously closed in the radial direction of the winding shaft under the action of the corresponding transmission portions, ensuring a clamping effect and clamping coaxiality of the winding shaft.

In some embodiments, the clamping assembly further includes a base, the base being rotatably mounted in the housing about the axis of the winding shaft, and the base being configured to abut against the clamping members to prevent the clamping members from moving in the axial direction of the winding shaft.

The base capable of rotating about the axis of the winding shaft is provided, so that it can be ensured that the clamping members are prevented from moving in the axial direction of the winding shaft while the clamping members can rotate about the axis of the winding shaft, so as to avoid the situation in which the clamping members do not clamp the winding shaft due to the offset of the clamping members caused by the wedged fit during transmission of the transmission member.

In some embodiments, one end surface of the base is provided with an accommodating recess, a part of each of the clamping members is located in the accommodating recess, and the other part of the clamping member is located outside the accommodating recess and in wedged fit with the transmission member.

The base has a simple structure and is easily manufactured. Since a part of the clamping member abuts in the accommodating recess, when moving in the axial direction of the winding shaft, the transmission member can easily drive the clamping member to radially slide along the accommodating recess, so that the winding shaft is clamped by the clamping members.

In some embodiments, the clamping mechanism further includes: a bearing, the base being mounted in the housing by means of the bearing.

With the bearing, the base can be stably rotated in the housing, ensuring stability of the winding shaft during winding.

In some embodiments, one of the base and the bearing is provided with a limiting protrusion and the other one is provided with a limiting groove, and the limiting protrusion and the limiting groove are engaged with each other to prevent the base from moving in the axial direction of the winding shaft.

The base and the bearing are engaged with each other by means of the limiting protrusion and the limiting groove, and the base is limited in the axial direction of the winding shaft, so that the base cannot be displaced due to a movement of the transmission member, ensuring that the winding shaft is successfully clamped by the clamping members.

In some embodiments, the clamping assembly further includes: an elastic element configured to apply an elastic force to the plurality of clamping members, so that the plurality of clamping members are opened in the radial direction of the winding shaft to release the end of the winding shaft.

When the first drive unit drives the transmission member to move back, that is, the transmission member no longer acts on the clamping members, the plurality of clamping members can be radially opened under the action of the elastic element to release the winding shaft, which facilitates withdrawing of the winding shaft.

In some embodiments, the clamping mechanism further includes: a connector provided in the housing, the first drive unit being connected to the connector to drive the connector to move in the axial direction of the winding shaft; and a second drive unit fixed to the connector and connected to the transmission member, the second drive unit being used to drive the transmission member to rotate about the axis of the winding shaft.

The first drive unit drives the transmission member to drive the clamping members to clamp the winding shaft, the second drive unit drives the transmission member and the clamping members to actively rotate, so that two ends of the winding shaft rotate at the same speed, ensuring the winding quality of the electrode assembly. Moreover, the problem of breakage of the winding shaft due to excessive torque on one end of the winding shaft can be solved by means of active rotation. The connector is provided, so that the first drive unit is prevented from rotating when the second drive unit achieves active rotation, effectively controlling a work load of the winding shaft fixture, and saving the operation cost.

In some embodiments, the clamping mechanism further includes: a guide rod fixed in the housing and extending parallel to the axial direction of the winding shaft; where the connector is slidably sleeved around the guide rod.

The guide rod is provided, so that the base can be driven by the first drive unit to move stably in the axial direction of the winding shaft, ensuring that the transmission member successfully drives the clamping members to radially close.

In some embodiments, the clamping mechanism further includes: a second drive unit provided in the housing, the second drive unit being used to drive the clamping assembly to rotate about the axis of the winding shaft.

The second drive unit provides a torque, so that the two ends of the winding shaft rotate at the same speed, ensuring the winding quality of the electrode assembly; Moreover, the problem of breakage of the winding shaft due to excessive torque on one end of the winding shaft can be solved by means of active rotation.

In some embodiments, the clamping assembly includes a plurality of clamping members, each of the clamping members having a first bevel that is used to be attached to the end of the winding shaft.

The end of the winding shaft is sharp. The first bevel of the clamping member can be effectively attached to a bevel of the end of the winding shaft, ao as to ensure interaction interfaces between all the clamping members and the end of the winding shaft when the clamping members are closed and effectively clamp the winding shaft, avoiding the situation in which the clamping mechanism slips off the winding shaft when the winding shaft is tensioned.

In some embodiments, the clamping assembly includes a plurality of clamping members, each of the clamping members being provided with a protrusion that is used to be embedded in a recess provided at the end of the winding shaft.

With the protrusion and the recess respectively provided on the clamping member and the end of the winding shaft, the clamping members firmly grip the winding shaft when clamping the end of the winding shaft, so as to ensure a clamping force of the clamping member to the end of the winding shaft, avoiding the situation in which the clamping mechanism slips off the winding shaft when the winding shaft is tensioned.

In a second aspect, the present invention provides a winding device, including: a mounting base; a winding shaft with one end mounted on the mounting base; and a winding shaft fixture according to any one of the foregoing embodiments, where the clamping mechanism is used to clamp the other end of the winding shaft.

In the foregoing implementation, the mounting base is connected to one end of the winding shaft and drives the winding shaft to carry out winding. The clamping mechanism clamps the other end of the winding shaft, the tensioning mechanism applies a pulling force to the winding shaft, so that the rigidity of the winding shaft can be effectively improved, the deflection deformation of the winding shaft can be reduced, and the winding quality of the electrode assembly can be ensured.

In a third aspect, the present invention provides a winding device, including a mounting base; a winding shaft with one end mounted on the mounting base; and a tensioning mechanism configured to apply a pulling force to the winding shaft at the other end of winding shaft.

In the foregoing implementation, the tensioning mechanism applies a pulling force to the winding shaft, so that the rigidity of the winding shaft can be effectively improved, the deflection deformation of the winding shaft can be reduced, and the winding quality of the electrode assembly can be ensured.

In a fourth aspect, the present invention provides a method for preparing an electrode assembly, including:

applying a pulling force to an end of a winding shaft; and
rotating the winding shaft to wind an electrode plate and a separator that are stacked so as to form the electrode assembly.

In the foregoing implementation, the pulling force is applied to the end of the winding shaft to improve the rigidity of the winding shaft, and when the winding shaft is rotated to wind the electrode plate and the separator that are stacked, the deflection deformation of the winding shaft can be effectively reduced, ensuring a winding effect of the electrode assembly.

Brief Description of the Drawings

In order to more clearly describe the technical solutions of the embodiments of the present application, the accompanying drawings required in the embodiments will be described briefly below. It should be understood that the following accompanying drawings illustrate only some embodiments of the present application and therefore should not be construed as a limitation on the scope thereof. For those of ordinary skill in the art, other relevant accompanying drawings can also be obtained from these accompanying drawings without any creative effort.

Fig. 1 is a schematic diagram of a design thinking of a winding shaft fixture provided in the present application;

Fig. 2 is a schematic diagram of a winding shaft fixture according to some embodiments of the present application;

Fig. 3 is a diagram of an internal structure of a clamping mechanism according to some embodiments of the present application;

Fig. 4 is a schematic structural diagram of a clamping mechanism according to some embodiments of the present application;

Fig. 5 is a partial sectional view of a clamping mechanism according to some embodiments of the present application;

Fig. 6 is an enlarged view of part VI in Fig. 5;

Fig. 7 is a schematic diagram of a base according to some embodiments of the present application;

Fig. 8 is a sectional view of a clamping mechanism according to some embodiments of the present application;

Fig. 9 is a schematic diagram of a clamping member and a transmission member according to some embodiments of the present application;

Fig. 10 is a schematic diagram of a base and clamping members in the clamping mechanism provided in Fig. 8;

Fig. 11 is a schematic diagram of clamping members and an elastic element according to some embodiments of the present application;

Fig. 12 is a schematic diagram of a clamping mechanism according to some embodiments of the present application;

Fig. 13 is a sectional view of a clamping mechanism according to some embodiments of the present application;

Fig. 14 is a schematic diagram of clamping members and a winding shaft according to some embodiments of the present application;

Fig. 15 is a schematic diagram of clamping members and a winding shaft according to some embodiments of the present application;

Fig. 16 is a schematic flowchart of a method for preparing an electrode assembly according to some embodiments of the present application.

List of reference signs: 10 - Winding shaft; 11 - Mounting base; 12 - Front support; 13 - Winding shaft fixture; 20 - Clamping mechanism; 21 - Housing; 22 - Clamping assembly; 23 - First drive unit; 24 - Bearing; 25 - Connector; 26 - Second drive unit; 27 - Guide rod; 28 - First supporting plate; 29 - Second supporting plate; 30 - Tensioning mechanism; 40 - Spacer; 210 - Opening; 220 - Transmission member; 221 - Clamping member; 222 - Base; 223 - Elastic element; 2200 - Connecting portion; 2201 - Transmission portion; 2202 - Second bevel; 2203 - Disc-shaped block; 2204 - Wedge groove; 2210 - Third bevel; 2211 - Wedge block; 2212 - Small section; 2213 - Large section; 2214 - Skewed-tooth structure; 2215 - Blocky structure; 2220 - Guide groove; 2221 - Sleeve; 2222 - Accommodating recess; 2223 - Support block; 2224 - Slide slot; 2225 - Limiting protrusion.

## Detailed Description of Embodiments

In order to make the objects, technical solutions and advantages of embodiments of the present application clearer, the technical solutions in the embodiments of the present application will be described clearly and completely below with reference to the accompanying drawings in the embodiments of the present application. It will be apparent that the embodiments described are some of, rather than all of, the embodiments of the present application. Generally, the assemblies of the embodiments of the present application described and illustrated in the accompanying drawings herein may be arranged and designed in a variety of different configurations.

Thus, the following detailed description of the embodiments of the present application provided in the accompanying drawings is not intended to limit the scope of the present application as claimed, but is merely representative of the selected embodiments of the present application. All the other embodiments obtained by those of ordinary skill in the art based on the embodiments of the present application without creative efforts shall fall within the scope of protection of the present application.

It should be noted that like numerals and letters refer to like items in the following accompanying drawings, so once an item is defined in one accompanying drawing, it does not require further definition and explanation in subsequent accompanying drawings.

In the description of the embodiments of the present application, it should be understood that orientations or positional relationships indicated by the terms "center", "upper", "lower", "left", "right", "vertical", "horizontal", "inside", "outside", etc. are based on the orientations or positional relationships shown in the accompanying drawings or are orientations or positional relationships in which a product of the present application is conventionally placed when in use, or the orientations or positional relationships commonly understood by those skilled in the art, and are intended to facilitate the description of the present application and simplify the description only, rather than indicating or implying that the device or element referred to must have a particular orientation or be constructed and operated in a particular orientation, and will not to be interpreted as limiting the present application.

In the description of the embodiments of the present application, it should also be noted that the terms "provided", "mounting", "connecting", and "connection" should be interpreted in the broad sense unless explicitly defined and limited otherwise. For example, the terms may mean a fixed connection, a detachable connection, or an integral connection, or may be a direct connection, an indirect connection by means of an intermediate medium, or internal communication between two elements. For those of ordinary skill in the art, the specific meanings of the terms mentioned above in the present application can be construed according to specific circumstances.

It should be noted that the embodiments in the present application and features in the embodiments may be combined with each other without conflicts.

The technical solution of the present application will be described below with reference to the accompanying drawings.

At present, from the perspective of the development of the market situation, the traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles and electric vehicles and in many fields such as military equipment and aerospace. With the continuous expansion of the application field of traction batteries, the market demand for the traction batteries is also expanding.

In battery production, a wound electrode assembly is formed by winding an electrode plate and a separator by means of a winding shaft, and the winding speed directly affects the production efficiency of the electrode assembly and a battery. However, in the prior art, it is easy to produce unqualified electrode assemblies by simply increasing the winding speed.

After research, the inventor found that the cause of the above problem lies in the insufficient rigidity of the winding shaft. The winding shaft may have the deflection deformation when it is only affected by dead weight, and it may also be affected by tension of the electrode plate and separator during winding, which greatly increases the deformation amount of the winding shaft, and in such a state, the electrode assembly produced by winding will have various quality problems. In order to produce qualified electrode assemblies in this case, the winding speed is required to be reduced, which leads to a great reduction in the battery production efficiency.

Based on the above considerations, in order to meet the demand of increasing the winding speed and to solve the problem of a low winding quality due to insufficient rigidity of the winding shaft, the inventor, after an intensive study, found the following.

It can be seen from the beam deflection deformation that in the absence of a pretension force, that is, one end of the winding shaft is connected to a mounting base (the mounting base can drive the winding shaft to rotate to produce an electrode assembly by winding), and the other end of the winding shaft is in a free state, the deformation of the winding shaft refers to the deformation of a cantilever beam with one end fixed, and the deflection deformation equation is

$$y_{max} = -\frac{5FL^3}{384EI} = -\frac{5FL^3}{6\Pi ED^4}$$ ; and when a pretension force is applied to the other end of the winding shaft, that is, when one end of the winding shaft is connected to the mounting base, and the other end thereof is fixed and provided with a pulling force, the deflection deformation equation is

$$y_{max} = -\frac{FL^3}{384EI} = -\frac{FL^3}{6\Pi ED^4}$$ , where F is a resultant force of the tension of the electrode plate and separator and the dead weight to the winding shaft, L is a length of the winding shaft, E is an elastic modulus of the winding shaft, and D is a diameter of the winding shaft. It can be seen from the above two equations that a bending deformation value when the pretension force is applied is equivalent to 20% of the deformation of the cantilever beam with one end fixed, so the rigidity of the winding shaft can be significantly improved after the pretension force is applied, thereby improving the winding rate and quality of the electrode assembly.

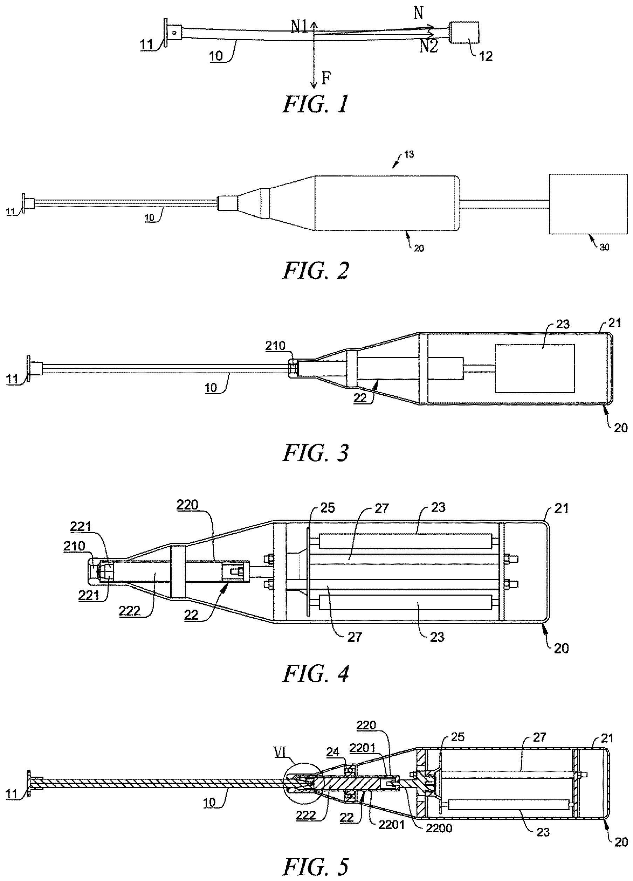

To this end, the inventor proposes a design thinking. Referring to Fig. 1, Fig. 1 is a schematic diagram of a design thinking of a winding shaft fixture 13 provided in the present application. One end of a winding shaft 10 is fixed to a mounting base 11, and the other end of the winding shaft 10 is inserted into a front support 12. The mounting base 11 can drive the winding shaft 10 to rotate about an axis of the winding shaft 10 to wind an electrode plate and a separator that are stacked on the winding shaft 10 so as to form an electrode assembly. Considering that after the end of the winding shaft 10 is inserted into the front support 12, the winding shaft has a high degree of freedom and may move backward and forward in an insertion direction of the winding shaft 10, the winding shaft 10 is deformed and bent by an external force and the dead weight, so that the end thereof may be displaced within the front support 12. Therefore, by fixing and clamping the end of the winding shaft 10 that is away from the mounting base 11, a large deformation of the winding shaft 10 can be avoided. Then, a pulling force N is applied in an axial direction of the winding shaft 10 to tension the winding shaft 10. When the winding shaft 10 is deformed due to the resultant force F of the tension of the electrode plate and separator and the dead weight, the pulling force N produces two components, where a component N1 is in a direction opposite the resultant force F, and a component N2 is in a direction in which the winding shaft 10 moves backward and forward. At this point, the component N1 offsets part of the resultant force F, reducing the impact of the tension of the electrode plate and separator and the dead weight on the deformation of the winding shaft 10, thereby ensuring the winding speed and quality of the electrode assembly.

Based on the above design thinking, some embodiments of the present application provide a winding shaft fixture 13. Referring to Fig. 2, Fig. 2 is a schematic diagram of a winding shaft fixture 13 according to some embodiments of the present application.

The winding shaft fixture 13 includes a clamping mechanism 20 and a tensioning mechanism 30. The clamping mechanism 20 is used to clamp or release an end of the winding shaft 10. The tensioning mechanism 30 is connected to the clamping mechanism 20, the tensioning mechanism 30 is configured to apply a pulling force to the clamping mechanism 20 when the clamping mechanism 20 clamps the end of the winding shaft 10, so as to apply the pulling force to the winding shaft 10. As shown, N is directed in a direction in which the pulling force is applied to the winding shaft 10 by the tensioning mechanism 30.

The "end of the winding shaft 10" refers to an end of the winding shaft 10 that is away from the mounting base 11. The mounting base 11 is connected to one end of the winding shaft 10 and can drive the winding shaft 10 to rotate to wind an electrode plate and a separator that are stacked so as to form an electrode assembly. In an actual working condition, the winding shaft 10 is located between the mounting base 11 and the clamping mechanism 20, and two ends of the winding shaft 10 are fixed respectively by the mounting base 11 and the clamping mechanism 20. The tensioning mechanism 30 applies a pulling force to the winding shaft 10 by means of the clamping mechanism 20 to improve the rigidity of the winding shaft 10 and reduce the impact of the tension of the electrode plate and separator (the electrode plate and separator that are stacked) and the dead weight of the winding shaft 10 on the deformation of the winding shaft 10. It is to be understood that the clamping mechanism 20 includes a power device capable of performing a clamping action, a power source of which is not limited to a commonly used electric motor, cylinder or electro-pneumatic power element. The tensioning mechanism 30 includes a power device providing pulling traction, a power source of which is not limited to a commonly used electric motor, cylinder or electro-pneumatic power element.

In the foregoing implementation, when the clamping mechanism 20 clamps the end of the winding shaft 10, the tensioning mechanism 30 applies a pulling force to the winding shaft 10 to tension the winding shaft 10, thereby reducing the deflection deformation of the winding shaft 10, ensuring the winding quality of the electrode assembly, and allowing the winding speed to be increased to improve the production efficiency of the electrode assembly.

According to some embodiments of the present application, optionally, referring to Fig. 3, Fig. 3 is a diagram of an internal structure of a clamping mechanism 20 according to some embodiments of the present application. The clamping mechanism 20 includes a housing 21 and a clamping assembly 22. The housing 21 has an opening 210 for the winding shaft 10 to extend through. The clamping assembly 22 is provided in the housing 21 and is rotatably connected to the housing 21 about the axis of the winding shaft 10. The clamping assembly 22 is used to clamp or release the end of the winding shaft 10. The tensioning mechanism 30 is connected to the housing 21.

The clamping assembly 22 is connected to the housing 21, that is, when the tensioning mechanism 30 applies a pulling force to the housing 21, the pulling force can act on the clamping assembly 22 , so that the tensioning mechanism 30 can apply the pulling force to the winding shaft 10 clamped by the clamping assembly 22. The clamping assembly 22 is provided inside the housing 21 and can rotate relative to the housing 21 about the axis of the winding shaft 10, that is, the clamping assembly 22 can rotate with the winding shaft 10 when clamping the winding shaft 10, ensuring that the winding shaft 10 carries out winding. The end of the winding shaft 10 extends into the housing 21 through the opening 210 of the housing 21, and the part of the winding shaft 10 extending into the housing 21 can be clamped and fixed by the clamping assembly 22.

The end of the winding shaft 10 extends into the housing 21 through the opening 210 and is clamped by the clamping assembly 22, and the tensioning mechanism 30 pulls the housing 21 to tension the winding shaft 10. Since the clamping assembly 22 is designed to be rotatably connected to the housing 21 about the axis of the winding shaft 10, the clamping assembly 22 may actively rotate to match the rotation of the winding shaft 10 or may be driven to rotate by the winding shaft 10, and the housing 21 and the tensioning mechanism 30 are not required to rotate with the winding shaft 10, so that manufacturing cost of the winding shaft fixture 13 and operation cost for winding can be effectively reduced.

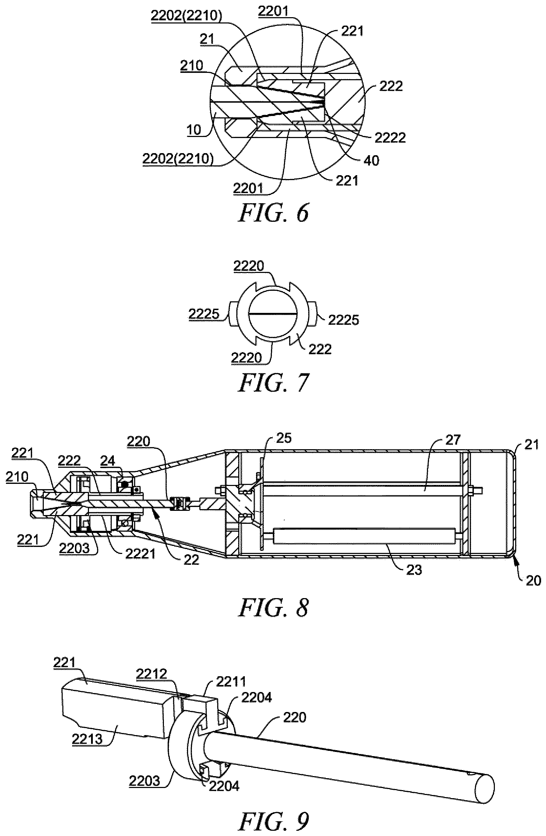

According to some embodiments of the present application, optionally, referring to Figs. 4 to 6, Fig. 4 is a schematic structural diagram of a clamping mechanism 20 according to some embodiments of the present application, Fig. 5 is a partial sectional view of a clamping mechanism 20 according to some embodiments of the present application, and Fig. 6 is an enlarged view of part VI in Fig. 5. The clamping assembly 22 includes a transmission member 220 and a plurality of clamping members 221. The plurality of clamping members 221 are distributed about the axis of the winding shaft 10, and each of the clamping members 221 is in wedged fit with the transmission member 220. The clamping mechanism 20 further includes: a first drive unit 23 provided in the housing 21. The first drive unit 23 is used to drive the transmission member 220 to move in the axial direction of the winding shaft 10, so that the plurality of clamping members 221 are closed in a radial direction of the winding shaft 10 to clamp the end of the winding shaft 10.

Two or more clamping members 221 may be provided to provide a clamping force to the winding shaft 10 in the radial direction of the winding shaft 10 to firmly clamp the winding shaft 10. Optionally, two clamping members 221 are provided, where one of the clamping members 221 provides a clamping force to an upper surface of the winding shaft 10 and the other clamping member 221 provides a clamping force to a lower surface of the winding shaft 10, and the two clamping forces are co-linear and pass through the center of the winding shaft 10, so that the winding shaft 10 can be stably clamped. Optionally, a spacer 40 may be provided between the clamping members 221, the spacer 40 is inserted between two parts of the winding shaft 10 to avoid the situation in which when the clamping members 221 clamp the winding shaft, a gap of the winding shaft 10 becomes smaller to make the winding shaft 10 deformed into an oval, which affects the winding quality. Referring to Fig. 6, "wedged fit" means that an interaction interface between the clamping member 221 and the transmission member 220 is inclined. When the first drive unit 23 drives the transmission member 220 to move along the axis of the winding shaft 10, the transmission member 220 displaces the clamping members 221 toward the winding shaft 10 along the interaction interface in the radial direction of the winding shaft 10 to be radially closed, thereby clamping the winding shaft 10. It is to be understood that the first drive unit 23 may include a device capable of outputting linear motion such as a cylinder or a linear electric motor. Of course, in other embodiments, the clamping assembly 22 may be other devices capable of performing a clamping action, such as a manipulator or jaws.

When the first drive unit 23 is operated to drive the transmission member 220 to move along the axis of the winding shaft 10, due to a wedged fit between the transmission member 220 and the clamping members 221, the transmission member 220 can effectively drive all the clamping members 221 to radially close, and a clamping force of the clamping members 221 to the end of the winding shaft 10 can be ensured. Moreover, transmission between the transmission member 220 and the clamping members 221 described above is carried out in a simple way, which can ensure the power transmission efficiency and reduce the difficulty of designing the transmission member 220 and the clamping members 221.

According to some embodiments of the present application, optionally, referring to Fig. 5, the clamping assembly 22 further includes a base 222, where the base 222 is rotatably mounted in the housing 21 about the axis of the winding shaft 10, and the transmission member 220 is movably mounted on the base 222 in the axial direction of the winding shaft 10.

The transmission member 220 is mounted on the base 222, is supported by the base 222 and can move in the axial direction of the winding shaft 10 to act on the clamping members 221, thereby driving the clamping members 221 to radially close. The base 222 is mounted in the housing 21 and can rotate about the axis of the winding shaft 10, so that the transmission member 220 can rotate about the axis of the winding shaft 10 under the support of the base 222 to match the rotation of the winding shaft 10 or to be driven to rotate by the winding shaft 10.

The base 222 capable of rotating about the axis of the winding shaft 10 is provided, so that the transmission member 220 can not only move along the axis of the winding shaft 10, but can also rotate about the axis of the winding shaft 10, so as to synchronously rotate with the winding shaft 10, , thereby ensuring the normal operation of the winding shaft 10.

According to some embodiments of the present application, optionally, referring to Fig. 5, the transmission member 220 passes through the base 222 in the axial direction of the winding shaft 10, one end of the transmission member 220 is in wedged fit with the plurality of clamping members 221, and the other end of the transmission member 220 is connected to the first drive unit 23.

In the axial direction of the winding shaft 10, the transmission member 220 is located between the clamping member 221 and the first drive unit 23, that is, the three are arranged along the axis of the winding shaft 10.

The transmission member 220 is designed to be located between the clamping members 221 and the first drive unit 23 in the axial direction of the winding shaft 10, so that the transmission member 220 can be driven by the first drive unit 23 to drive the clamping members 221 to close in the radial direction of the winding shaft 10 in a shortest path, so as to quickly clamp the winding shaft 10. Moreover, the clamping members 221, the transmission member 220 and the first drive unit 23 are arranged in the axial direction of the winding shaft 10, which facilitates the spatial arrangement of the individual structures in the clamping mechanism 20.

According to some embodiments of the present application, referring to Figs. 5, 6, and 7, Fig. 7 is a schematic diagram of a base 222 according to some embodiments of the present application. The base 222 is provided with a plurality of guide grooves 2220, the plurality of guide grooves 2220 are distributed at intervals in a circumferential direction of the base 222, and each of the guide grooves 2220 extends in an axial direction of the base 222. The transmission member 220 includes a connecting portion 2200 and a plurality of transmission portions 2201, the transmission portions 2201 are arranged corresponding to the guide grooves 2220, each of the transmission portions 2201 is slidably provided in the corresponding guide groove 2220, one end of each transmission portion 2201 is in wedged fit with the corresponding clamping member 221, the other end of each transmission portion 2201 is connected to the connecting portion 2200, and the connecting portion 2200 is connected to the first drive unit 23.

The number of guide grooves 2220 corresponds to the number of transmission portions 2201, and each transmission portion 2201 can slide in the corresponding guide groove 2220 in the axial direction of the winding shaft 10. The number of transmission portions 2201 is the same as the number of clamping members 221, and the two correspond to each other on a one-to-one basis. A wall surface of the transmission portion 2201 located at the end of the transmission portion that is away from the first drive unit 23 and facing the clamping member 221 is provided with a second bevel 2202, a wall surface of the clamping member 221 facing the transmission portion 2201 is provided with a third bevel 2210, and the second bevel 2202 abuts against the third bevel 2210, so that the clamping member 221 is in wedged fit with the transmission portion 2201, and thus each transmission portion 2201 can drive the corresponding clamping member 221 to move in the radial direction of the winding shaft 10. All of the transmission portions 2201 are connected to the first drive unit 23 by means of the connecting portion 2200, that is, when in operation, the first drive unit 23 can drive all the transmission portions 2201 to slide in the corresponding guide grooves 2220, so to drive the corresponding clamping members 221 to radially move, so that all the clamping members 221 are radially closed to clamp the winding shaft 10.

With the connecting portion 2200, the first drive unit 23 can drive all the transmission portions 2201 to slide simultaneously, so that all the clamping members 221 are synchronously closed in the radial direction of the winding shaft 10 under the action of the corresponding transmission portions 2201, ensuring a clamping effect and clamping coaxiality of the winding shaft 10 , where the clamping coaxiality means that the center lines of all the clamping members 221 in the axial direction of the winding shaft 10 coincide with the axis of the winding shaft 10 when all the clamping members 221 are radially closed.

Optionally, referring to Figs. 8 and 9, Fig. 8 is a sectional view of a clamping mechanism 20 according to some embodiments of the present application, and Fig. 9 is a schematic diagram of a clamping member 221 and a transmission member 220 according to some embodiments of the present application. The transmission member 220 includes a disc-shaped block 2203. The disc-shaped block 2203 is provided with wedge grooves 2204, and the number of wedge grooves 2204 is the same as the number of clamping members 221. A wedge block 2211 is provided at an end of each clamping member 221, and the wedge block 2211 is embedded in the corresponding wedge groove 2204 to realize a wedged fit between the clamping member 221 and the transmission member 220. The base 222 includes a sleeve 2221, and the transmission member 220 passes through the sleeve 2221 and is in wedged fit with the clamping member 221. When the first drive unit 23 is operated to drive the transmission member 220 to move along the axial direction of the winding shaft, the wedge groove 2204 pushes the wedge block 2211, driving all the clamping members 221 to radially close to clamp the end of the winding shaft 10.

According to some embodiments of the present application, optionally, the clamping assembly 22 further includes a base 222, where the base 222 is rotatably mounted in the housing 21 about the axis of the winding shaft 10, and the base 222 is configured to abut against the clamping members 221 to prevent the clamping members 221 from moving in the axial direction of the winding shaft 10.

The clamping members 221 abut against the base 222 in the axial direction of the winding shaft 10, realizing limiting in the axial direction of the winding shaft 10. When the transmission member 220 moves in the axial direction of the winding shaft 10, it can be ensured that the clamping members 221 cannot move in the axial direction of the winding shaft 10, but moves only in the radial direction of the winding shaft 10, thereby clamping or releasing the end of the winding shaft 10. Since the base 222 is mounted in the housing 21 and can rotate about the axis of the winding shaft 10, the clamping members 221 can rotate about the axis of the winding shaft 10 under the support of the base 222 to match the rotation of the winding shaft 10 or to be driven to rotate by the winding shaft 10.

The base 222 capable of rotating about the axis of the winding shaft 10 is provided, so that it can be ensured that the clamping members 221 are prevented from moving in the axial direction of the winding shaft 10 while the clamping members 221 can rotate about the axis of the winding shaft 10, so as to avoid the situation in which the clamping members 221 do not clamp the winding shaft 10 due to the offset of the clamping members 221 caused by the wedged fit during transmission of the transmission member 220.

According to some embodiments of the present application, optionally, referring to Fig. 6, one end surface of the base 222 is provided with an accommodating recess 2222, a part of each of the clamping members 221 is located in the accommodating recess 2222, and the other part of the clamping member is located outside the accommodating recess 2222 and in wedged fit with the transmission member 220.

A part of the clamping member 221 is located in the accommodating recess 2222 and an end of the clamping member 221 abuts against a bottom surface of the accommodating recess 2222. In the radial direction of the winding shaft 10, the accommodating recess 2222 also has extra space to allow the clamping member 221 to move in the radial direction of the winding shaft 10 to clamp or release the winding shaft 10.

The design of the accommodating recess 2222 enable the base 222 to have a simple structure and be easily manufactured. Since a part of the clamping member 221 abuts in the accommodating recess 2222, when moving in the axial direction of the winding shaft 10, the transmission member 220 can easily drive the clamping members 221 to slide toward the winding shaft 10 along the bottom surface of the accommodating recess 2222, so that the winding shaft 10 is clamped by the clamping members 221.

Optionally, referring to Figs. 8, 9, and 10, Fig. 10 is a schematic diagram of a base 222 and clamping members 221 in the clamping mechanism 20 provided in Fig. 8. The base 222 includes two support blocks 2223. The two support blocks 2223 are interconnected into a disc-like support structure, and the two support blocks 2223 are fixed to the sleeve 2221. The disc-shaped block 2203 that is in wedged fit with the clamping members 221 is accommodated in a cavity between the two support blocks 2223. The two support blocks 2223 jointly form a slide slot 2224 in the radial direction of the winding shaft 10. The clamping member 221 is provided with a small section 2212 that is in slide fit with the slide slot 2224, where the clamping member 221 may be regarded as a sequential connection of a large section 2213, the small section 2212, and the wedge block 2211 in the axial direction of the winding shaft 10. The large section 2213 is used to provide a clamping force to the winding shaft 10 and the large section 2213 has a greater size than the slide slot 2224 to abut against a surface of the support block 2223, thereby prevent the clamping members 221 from moving in the axial direction of the winding shaft 10. The small section 2212 is used to enable the clamping member 221 to slide in the radial direction of the winding shaft 10, so as to clamp or release the winding shaft 10. The wedge block 2211 is engaged with the wedge groove 2204 of the disc-shaped block 2203 to be driven by the transmission member 220, thereby enabling the clamping member 221 to perform a clamping action.

With the above design, the clamping members 221 can stably move in the radial direction of the winding shaft 10 and effectively prevent the clamping members 221 from moving along the axis of the winding shaft 10, ensuring that the clamping members 221 clamp the winding shaft 10 along a correct movement track.

According to some embodiments of the present application, optionally, the clamping mechanism 20 further includes a bearing 24, where the base 222 is mounted in the housing 21 by means of the bearing 24.

Optionally, referring to Fig. 5, an outer race of the bearing 24 is fixed to an inner wall of the housing 21, and the base 222 is fixed to an inner race of the bearing 24. The base 222 can rotate about the axis of the winding shaft 10 under the action of the bearing 24, so as to rotate with the winding shaft 10.

Optionally, referring to Fig. 8, the outer race of the bearing 24 is fixed to the inner wall of the housing 21, and the sleeve 2221 of the base 222 is fixed to the inner race of the bearing 24, so that the base 222 can rotate about the axis of the winding shaft 10, so as to rotate with the winding shaft 10.

With the bearing 24, the base 222 can be stably rotated in the housing 21, ensuring stability of the winding shaft 10 during winding.

According to some embodiments of the present application, optionally, one of the base 222 and the bearing 24 is provided with a limiting protrusion 2225 and the other one is provided with a limiting groove, and the limiting protrusion 2225 and the limiting groove are engaged with each other to prevent the base 222 from moving in the axial direction of the winding shaft 10.

The limiting protrusion 2225 and the limiting groove are arranged in at least two manners, one is that the limiting protrusion 2225 is provided on a surface of the base 222 and the limiting groove is provided in the inner race of the bearing 24. The other one is that the limiting protrusion 2225 is provided on the inner race of the bearing 24 and the limiting groove is provided in a surface of the base 222. It is to be understood that another conceivable arrangement manner is that a surface of the base 222 is provided with a limiting protrusion 2225 and a limiting groove, the inner race of the bearing 24 is provided with a limiting groove and a limiting protrusion 2225, the limiting protrusion 2225 of the base 222 is engaged with the limiting groove of the bearing 24, and the limiting groove of the base 222 is engaged with the limit protrusion 2225 of the bearing 24. Referring to Fig. 7, two limiting protrusions 2225 are provided on a surface of the base 222, and correspondingly, two limiting grooves (not shown in the figure) are provided in the inner race of the bearing 24 to effectively prevent the base 222 from moving in the axial direction of the winding shaft 10.

The base 222 and the bearing 24 are engaged with each other by means of the limiting protrusion 2225 and the limiting groove, and the base 222 is limited in the axial direction of the winding shaft 10, so that the base 222 cannot be displaced along the axis of the winding shaft 10 due to a movement of the transmission member 220, ensuring that the winding shaft 10 is successfully clamped by the clamping members 221.

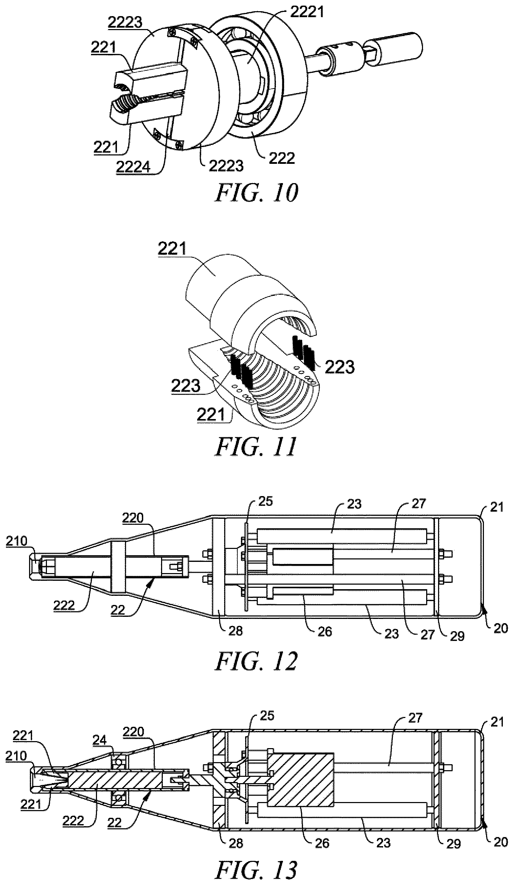

According to some embodiments of the present application, optionally, referring to Fig. 11, Fig. 11 is a schematic diagram of clamping members 221 and an elastic element 223 according to some embodiments of the present application. The clamping assembly 22 further includes an elastic element 223. The elastic element 223 is configured to apply an elastic force to the plurality of clamping members 221, so that the plurality of clamping members 221 are opened in the radial direction of the winding shaft 10 to release the end of the winding shaft 10.

The elastic element 223 provides the elastic force in the radial direction for the clamping members 221, so that the plurality of clamping members 221 have a tendency to radially open relative to each other. When the first drive unit 23 is operated to drive the transmission member 220 to move in the axial direction of the winding shaft 10, it is necessary to overcome the elastic force of the elastic element 223 to radially close the clamping members 221 to clamp the winding shaft 10. When the transmission member 220 does not act on the clamping members 221, the clamping members 221 are opened in the radial direction of the winding shaft 10 to release the end of the winding shaft 10. As shown in Fig. 11, the elastic element 223 includes a plurality of springs, and the plurality of springs are provided at the edges of the two clamping members 221 to provide elastic forces in the radial direction for the clamping members 221.

When the first drive unit 23 drives the transmission member 220 to move back, the transmission member 220 no longer acts on the clamping members 221, the plurality of clamping members 221 can be radially opened under the action of the elastic element 223 to release the winding shaft 10, facilitating withdrawing of the winding shaft 10 and also preparing for the next insertion of the winding shaft 10.

According to some embodiments of the present application, optionally, referring to Figs. 12 and 13, Fig. 12 is a schematic diagram of a clamping mechanism 20 according to some embodiments of the present application, and Fig. 13 is a sectional view of a clamping mechanism 20 according to some embodiments of the present application. The clamping mechanism 20 further includes a connector 25 and a second drive unit 26. The connector 25 is provided in the housing 21, and the first drive unit 23 is connected to the connector 25 to drive the connector 25 to move in the axial direction of the winding shaft 10. The second drive unit 26 is fixed to the connector 25 and is connected to the transmission member 220, and the second drive unit 26 is used to drive the transmission member 220 to rotate about the axis of the winding shaft 10.

Referring to Fig. 13, one end of the connector 25 is rotatably connected to the connecting portion 2200 of the transmission member 220, and the rotatable connection manner may be achieved in the form of sleeving with balls. The connecting portion 2200 is supported by the connector 25 to ensure that the transmission member 220 rotates stably about the axis of the winding shaft 10. The first drive unit 23 and the second drive unit 26 are connected to the other end of the connector 25, and an execution end of the second drive unit 26 passes through the connector 25 and is connected to the connecting portion 2200, so that when in operation, the second drive unit 26 can drive the connecting portion 2200 to rotate, so as to drive the transmission portion 2201, the clamping members 221 and the winding shaft 10 to rotate. When in operation, the first drive unit 23 can drive the connector 25, the transmission portion 2201 and the second drive unit 26 to move in the axial direction of the winding shaft 10, so that the winding shaft 10 is clamped by the clamping members 221.

The first drive unit 23 drives the clamping members 221 by means of the transmission member 220 to clamp the winding shaft 10, the second drive unit 26 drives the transmission member 220 and the clamping members 221 to actively rotate, so that two ends of the winding shaft 10 rotate at the same speed, ensuring the winding quality of the electrode assembly. Moreover, the problem of breakage of the winding shaft due to excessive torque on one end of the winding shaft 10 can be solved by means of active rotation. The connector 25 is provided, so that the first drive unit 23 is not required to rotate with the winding shaft 10 when the second drive unit 26 achieves active rotation, effectively controlling a work load of the winding shaft fixture 13, and saving the operation cost.

It is to be understood that the second drive unit 26 may include an electric motor or other devices capable of outputting a torque.

It is to be understood that, referring to Fig. 5, as described above, one end of the connector 25 is rotatably connected to the connecting portion 2200 of the transmission member 220, and the rotatable connection manner may be in the form of sleeving with balls. The connecting portion 2200 is supported by the connector 25 to ensure that the transmission member 220 rotates stably about the axis of the winding shaft 10. The first drive unit 23 is connected to the other end of the connector 25 to drive the transmission member 220 to move along the axis of the winding shaft 10, and also to ensure that the transmission member 220 and the clamping members 221 rotate about the axis of the winding shaft 10.

It is to be understood that the clamping mechanism 20 shown in Fig. 8 may also include a connector 25, where one end of the connector 25 is rotatably connected to the transmission member 220, and the first drive unit 23 is connected to the other end of the connector 25 to drive the transmission member 220 to move along the axis of the winding shaft 10, and also to ensure that the transmission member 220 and the clamping members 221 rotate about the axis of the winding shaft 10.

According to some embodiments of the present application, optionally, referring to Fig. 12, the clamping mechanism 20 further includes a guide rod 27 fixed in the housing 21 and extending parallel to the axial direction of the winding shaft 10. Here, the connector 25 is slidably sleeved around the guide rod 27.

The clamping mechanism 20 further includes a first supporting plate 28 and a second supporting plate 29. The first supporting plate 28 and the second supporting plate 29 are fixed inside the housing 21 and spaced apart from each other in the axial direction of the winding shaft 10. The guide rod 27 is fixed between the first supporting plate 28 and the second supporting plate 29 in a direction parallel to the axial direction of the winding shaft 10 and used to guide the connector 25, so that the connector 25 is driven by the first drive unit 23 to move stably in the axial direction of the winding shaft 10. It is to be understood that the number of guide rods is not limited, but may be one, two or three, etc., in order to guide the connector 25.

The guide rod 27 is provided, so that the base 222 can be driven by the first drive unit 23 to move stably in the axial direction of the winding shaft 10, ensuring that the transmission member 220 successfully drives the clamping members 221 to radially close so as to clamp the winding shaft 10.

It is to be understood that, referring to Fig. 12, the first drive unit 23 may include a plurality of electric telescopic rods. The plurality of telescopic rods are fixed to the second supporting plate 29, and telescopic ends of the telescopic rods are connected to the connector 25 to drive the connector 25 to move in the axial direction of the winding shaft 10. It is to be understood that, in other embodiments, the first drive unit 23 may also include other devices capable of outputting linear motion, such as a combination of a movable telescopic rod and a cylinder.

According to some embodiments of the present application, optionally, the clamping mechanism 20 further includes a second drive unit 26 provided in the housing 21, the second drive unit 26 being used to drive the clamping assembly 22 to rotate about the axis of the winding shaft 10.

It is to be understood that the second drive unit 26 can drive the first drive unit 23, the transmission member 220 and the clamping member 221 to rotate together.

The second drive unit 26 provides a torque, so that the two ends of the winding shaft 10 rotate at the same speed, ensuring the winding quality of the electrode assembly. Moreover, the problem of breakage of the winding shaft due to excessive torque on one end of the winding shaft 10 can be solved by means of active rotation.

According to some embodiments of the present application, optionally, the clamping assembly 22 includes a plurality of clamping members 221, where each of the clamping members 221 has a first bevel that is used to be attached to the end of the winding shaft 10.

The end of the winding shaft 10 is sharp. The first bevel of the clamping member 221 can be effectively attached to the end of the winding shaft 10, so as to ensure interaction interfaces between all the clamping members 221 and the end of the winding shaft 10 when all the clamping members are closed and effectively clamp the winding shaft 10, avoiding the situation in which the clamping mechanism 20 slips off the winding shaft 10 when the winding shaft 10 is tensioned.

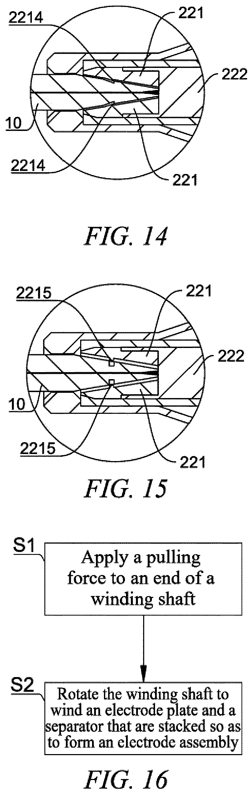

According to some embodiments of the present application, optionally, referring to Figs. 6, 14, and 15, Fig. 14 is a schematic diagram of clamping members 221 and a winding shaft 10 according to some embodiments of the present application, and Fig. 15 is a schematic diagram of clamping members 221 and a winding shaft 10 according to some embodiments of the present application. The clamping assembly 22 includes a plurality of clamping members 221, where each of the clamping members 221 is provided with a protrusion that is used to be embedded in a recess provided at the end of the winding shaft 10.

The protrusion and the recess have an embedded relationship, that is, when the clamping members 221 clamp the end of the winding shaft 10, the protrusion can be embedded in the recess, so that the clamping members 221 "grip" the winding shaft 10 to ensure the clamping effect of the clamping members 221 to the winding shaft 10. Referring to Fig. 6, in Fig. 6, the protrusion of the clamping member 221 includes a plurality of tooth structures, the recess of the winding shaft 10 includes a plurality of groove structures corresponding to the tooth structures. When the clamping members 221 clamp the winding shaft 10, the plurality of tooth structures are embedded in the plurality of groove structures, thereby improving the clamping effect of the clamping members 221 to the winding shaft 10. Referring to Fig. 14, the protrusion of the clamping member 221 includes a skewed-tooth structure 2214, and the recess of the winding shaft 10 includes a skewed-slot structure corresponding to the skewed-tooth structure 2214. When the clamping members 221 clamp the winding shaft 10, the skewed-tooth structure 2214 is embedded in the skewed-slot structure. If the clamping members 221 are not radially opened, the winding shaft 10 cannot be disengaged from the clamping members 221 because of the cooperation between the skewed-tooth structure 2214 and the skewed-slot structure, thereby improving the clamping effect of the clamping members 221 to the winding shaft 10. Referring to Fig. 15, the protrusion of the clamping member 221 includes a blocky structure 2215, and the recess of the winding shaft 10 includes a square-groove structure corresponding to the blocky structure 2215. When the clamping members 221 clamp the winding shaft 10, the blocky structure 2215 is embedded in the square-groove structure. If the clamping members 221 are not radially opened, the winding shaft 10 can not be disengaged from the clamping members 221 because of the cooperation between the blocky structure 2215 and the square-groove structure, thereby improving the clamping effect of the clamping member 221 to the winding shaft 10.

With the protrusion and the recess respectively provided on the clamping member 221 and the end of the winding shaft 10, the clamping members 221 firmly grip the winding shaft 10 when clamping the end of the winding shaft 10, so as to ensure a clamping force of the clamping members 221 to the end of the winding shaft 10, avoiding the situation in which the clamping mechanism 20 slips off the winding shaft 10 when the winding shaft 10 is tensioned.

According to some embodiments of the present application, the present application further provides a winding device. Referring to Fig. 2, the winding device includes a mounting base 11, a winding shaft 10, and a winding shaft fixture 13 according to any of the above solutions. One end of the winding shaft 10 is mounted on the mounting base 11. A clamping mechanism 20 is used to clamp the other end of the winding shaft 10.

The mounting base 11 is connected to one end of the winding shaft 10 and drives the winding shaft 10 to carry out winding. The clamping mechanism 20 clamps the other end of the winding shaft 10, the tensioning mechanism 30 applies a pulling force to the winding shaft 10, so that the rigidity of the winding shaft 10 can be effectively improved, the deflection deformation of the winding shaft 10 can be reduced, and the winding quality of the electrode assembly can be ensured.

According to some embodiments of the present application, the present application further provides a winding device, including a mounting base 11, a winding shaft 10, and a tensioning mechanism 30. One end of the winding shaft 10 is mounted on the mounting base 11. The tensioning mechanism 30 is configured to apply a pulling force to the winding shaft 10 at the other end of winding shaft 10.

The tensioning mechanism 30 applies a pulling force to the winding shaft 10, so that the rigidity of the winding shaft 10 can be effectively improved, the deflection deformation of the winding shaft 10 can be reduced, the winding quality of the electrode assembly can be ensured, and the winding speed can be allowed to be increased to improve the production efficiency of the electrode assembly. It is necessary for the tensioning mechanism 30 to be connected to the winding shaft 10 to apply a pulling force to the winding shaft 10. The connection relationship between the tensioning mechanism 30 and the winding shaft 10 is not limited to the way of clamping the winding shaft 10 by the clamping mechanism 20 as described above, and the end of the winding shaft 10 may also be fixed by other ways. For example, the tensioning mechanism may be connected to the winding shaft 10 by means of pin fixation, that is, a pin hole is provided at each of an end of the winding shaft 10 and an end of the tensioning mechanism 30, and the winding shaft is connected to the tensioning mechanism by means a pin; and when in operation, the tensioning mechanism 30 can pull the winding shaft 10 closer, thereby improving the rigidity of the winding shaft 10. It is to be understood that the tensioning mechanism 30 may also be connected to the end of the winding shaft 10 by means of snap-fitting, and when in operation, the tensioning mechanism 30 can pull the winding shaft 10 closer, thereby improving the rigidity of the winding shaft 10.

According to some embodiments of the present application, the present application further provides a method for preparing an electrode assembly. Referring to Fig. 16, Fig. 16 is a flowchart of a method for preparing an electrode assembly according to some embodiments of the present application. The method includes the following steps: S 1: applying a pulling force to an end of a winding shaft 10; and S2: rotating the winding shaft 10 to wind an electrode plate and a separator that are stacked so as to form the electrode assembly.

At step S1, the pulling force is applied to the end of the winding shaft 10 to improve the rigidity of the winding shaft 10, and when step S2 is performed, that is, when the winding shaft 10 is rotated to wind the electrode plate and the separator that are stacked, the deflection deformation of the winding shaft 10 can be effectively reduced, ensuring a winding effect of the electrode assembly, and allowing the winding speed to be increased to improve the production efficiency of the electrode assembly.

It is to be understood that, in conjunction with the second drive unit 26 described above, the method for preparing an electrode assembly, in some embodiments, may further include providing power to each end of the winding shaft 10, so that the two ends of the winding shaft 10 rotate at the same speed. By providing power to each end of the winding shaft 10, the rotational speeds of the two ends are synchronized to prevent inconsistent speeds at the front and rear ends of the winding shaft 10, which may lead to breakage of the winding shaft 10.

According to some embodiments of the present application, reference is made to Figs. 4 to 7. The present application provides a winding shaft fixture 13.

The winding shaft fixture 13 includes a clamping mechanism 20 and a tensioning mechanism 30. The clamping mechanism 20 includes a housing 21, a clamping assembly 22, a first drive unit 23, a connector 25, and a bearing 24. The housing 21 has an opening 210 for the winding shaft 10 to extend through. The clamping assembly 22 includes a transmission member 220, clamping members 221, a base 222 and an elastic element 223 (see Fig. 11). The transmission member 220 includes a connecting portion 2200 and a plurality of transmission portions 2201. The base 222 is mounted in the housing 21 by means of the bearing 24, and the bearing 24 and the base 222 are engaged with each other by means of a limiting protrusion 2225 and a limiting groove to prevent the base 222 from moving in the axial direction of the winding shaft 10. The base 222 is provided with a plurality of guide grooves 2220 extending along the axis of the winding shaft 10. The transmission portions 2201 are slidably provided in the guide grooves 2220 respectively. All the transmission portions 2201 are connected to the connecting portion 2200. The connecting portion 2200 is rotatably connected to the connector 25. The first drive unit 23 is connected to the connector 25, and the connector 25 can move stably in the axial direction of the winding shaft 10 under the guiding of the guide rod 27. Each connecting portion 2200 is in wedged fit with the corresponding clamping member 221. One end surface of the base 222 is provided with an accommodating recess 2222, and a part of the clamping member 221 is located in the accommodating recess 2222. Since the base 222 abuts against the clamping member, the clamping member 221 is limited in the axial direction of the winding shaft 10. Due to the accommodating recess 2222, the clamping member 221 is allowed to move in the radial direction of the winding shaft 10.

When in operation, the first drive unit 23 drives the connector 25 to move along the axis of the winding shaft 10, and drives all the transmission portions 2201 to move in the axial direction of the winding shaft 10 by means of the connecting portion; then, all the clamping members 221 are radially closed under the action of the transmission portions 2201 to clamp the winding shaft 10; and the tensioning mechanism 30 is operated to apply a pulling force to the winding shaft 10 to tension the winding shaft 10, thereby effectively improving the rigidity of the winding shaft 10, reducing the deflection deformation of the winding shaft 10, ensuring the winding quality of the electrode assembly, and allowing the winding speed to be increased to improve the production efficiency of the electrode assembly.

When the first drive unit 23 is reset, the transmission portions 2201 withdraw the action on the clamping members 221, and the clamping members 221 can be radially opened under the action of the elastic element 223 to release the end of the winding shaft 10, so that the winding shaft 10 can be pulled out of the winding shaft fixture 13.

The foregoing descriptions are merely preferred embodiments of the present application, and are not intended to limit the present application. For those skilled in the art, various modifications and variations may be made to the present application. Any modifications, equivalent substitutions, improvements, etc. made within the spirit and principle of the present application should fall within the scope of protection of the present application.

**Claims**

1. A winding shaft fixture, comprising:

   a clamping mechanism for clamping or releasing an end of a winding shaft; and
   a tensioning mechanism connected to the clamping mechanism, the tensioning mechanism being configured to apply a pulling force to the clamping mechanism when the clamping mechanism clamps the end of the winding shaft, so as to apply the pulling force to the winding shaft.

2. The winding shaft fixture according to claim 1, wherein the clamping mechanism comprises:

   a housing having an opening for the winding shaft to extend through; and
   a clamping assembly provided in the housing and rotatably connected to the housing about an axis of the winding shaft, the clamping assembly being used to clamp or release the end of the winding shaft; and
   wherein the tensioning mechanism is connected to the housing.

3. The winding shaft fixture according to claim 2, wherein the clamping assembly comprises a transmission member and a plurality of clamping members, the plurality of clamping members being distributed about the axis of the winding shaft, and each of the clamping members being in wedged fit with the transmission member; and
   the clamping mechanism further comprises:
   a first drive unit (23) provided in the housing, the first drive unit being used to drive the transmission member to move in an axial direction of the winding shaft, so that the plurality of clamping members are closed in a radial direction of the winding shaft to clamp the end of the winding shaft.

4. The winding shaft fixture according to claim 3, wherein the clamping assembly further comprises a base, the base being rotatably mounted in the housing about the axis of the winding shaft, and the transmission member being movably mounted on the base in the axial direction of the winding shaft.

5. The winding shaft fixture according to claim 4, wherein the transmission member passes through the base in the axial direction of the winding shaft (10), one end of the transmission member is in wedged fit with the plurality of clamping members, and the other end of the transmission member is connected to the first drive unit.

6. The winding shaft fixture according to claim 5, wherein the base is provided with a plurality of guide grooves, the plurality of guide grooves are distributed at intervals in a circumferential direction of the base, and each of the guide grooves extends in an axial direction of the base; and the transmission member comprises a connecting portion and a plurality of transmission portions, the transmission portions are arranged corresponding to the guide grooves, each of the transmission portions is slidably provided in the corresponding guide groove, one end of each transmission portion is in wedged fit with the corresponding clamping member, the other end of each transmission portion is connected to the connecting portion, and the connecting portion is connected to the first drive unit.

7. The winding shaft fixture according to claim 3, wherein the clamping assembly further comprises a base, the base being rotatably mounted in the housing about the axis of the winding shaft, and the base being configured to abut against the clamping members to prevent the clamping members from moving in the axial direction of the winding shaft.

8. The winding shaft fixture according to claim 7, wherein one end surface of the base is provided with an accommodating recess, a part of each of the clamping members is located in the accommodating recess, and the other part of the clamping member is located outside the accommodating recess and in wedged fit with the transmission member.

9. The winding shaft fixture according to any one of claims 4 to 8, wherein the clamping mechanism further comprises:
   a bearing, the base being mounted in the housing by means of the bearing.

10. The winding shaft fixture according to claim 9, wherein one of the base and the bearing is provided with a limiting protrusion and the other one is provided with a limiting groove, and the limiting protrusion and the limiting groove are engaged with each other to prevent the base from moving in the axial direction of the winding shaft.

11. The winding shaft fixture according to any one of claims 3 to 10, wherein the clamping assembly further comprises:
an elastic element configured to apply an elastic force to the plurality of clamping members, so that the plurality of clamping members are opened in the radial direction of the winding shaft to release the end of the winding shaft.

12. The winding shaft fixture according to any one of claims 3 to 11, wherein the clamping mechanism further comprises:

a connector provided in the housing, the first drive unit being connected to the connector to drive the connector to move in the axial direction of the winding shaft; and
a second drive unit fixed to the connector and connected to the transmission member, the second drive unit being used to drive the transmission member to rotate about the axis of the winding shaft.

13. The winding shaft fixture according to claim 12, wherein the clamping mechanism further comprises:

a guide rod fixed in the housing and extending parallel to the axial direction of the winding shaft; and
wherein the connector is slidably sleeved around the guide rod.

14. The winding shaft fixture according to any one of claims 2 to 11, wherein the clamping mechanism further comprises:
a second drive unit provided in the housing, the second drive unit being used to drive the clamping assembly to rotate about the axis of the winding shaft.

15. The winding shaft fixture according to any one of claim 2 to 14, wherein the clamping assembly comprises a plurality of clamping members, each of the clamping members having a first bevel that is used to be attached to the end of the winding shaft.

16. The winding shaft fixture according to any one of claims 2 to 14, wherein the clamping assembly comprises a plurality of clamping members, each of the clamping members being provided with a protrusion that is used to be embedded in a recess provided at the end of the winding shaft.

17. A winding device, comprising:

a mounting base;
a winding shaft with one end mounted on the mounting base; and
a winding shaft fixture according to any one of claims 1 to 16, wherein the clamping mechanism is used to clamp the other end of the winding shaft.

18. A winding device, comprising:

a mounting base;
a winding shaft with one end mounted on the mounting base; and
a tensioning mechanism configured to apply a pulling force to the winding shaft at the other end of the winding shaft.

19. A method for preparing an electrode assembly, comprising:

applying a pulling force to an end of a winding shaft; and
rotating the winding shaft to wind an electrode plate and a separator that are stacked so as to form the electrode assembly.

EP 4 243 137 A1

FIG. 1

FIG. 2

FIG. 3

FIG. 4

FIG. 5

16

FIG. 6

FIG. 7

FIG. 8

FIG. 9

FIG. 10

FIG. 11

FIG. 12

FIG. 13

2214    221

10    222

2214    221

*FIG. 14*

2215    221

10    222

2215    221

*FIG. 15*

S1 | Apply a pulling force to an end of a winding shaft

S2 | Rotate the winding shaft to wind an electrode plate and a separator that are stacked so as to form an electrode assembly

*FIG. 16*

## INTERNATIONAL SEARCH REPORT

| International application No. |
| --- |
| **PCT/CN2022/099571** |

**A. CLASSIFICATION OF SUBJECT MATTER**

H01M 10/04(2006.01)i; H01M 10/052(2010.01)i; H01M 10/0587(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, ENTXTC, CNKI, DWPI, ENTXT: 卷针, 夹紧, 固定, 拉, 端部, 前端, 后端, 一起, 转, roll needle, clamp, fix, pull, end, front, rear, together, rotate, whirl, spin

**C. DOCUMENTS CONSIDERED TO BE RELEVANT**

| Category* | Citation of document, with indication, where appropriate, of the relevant passages | Relevant to claim No. |
| --- | --- | --- |
| X | CN 103050727 A (ZHUHAI HIGRAND ELECTRONICS TECHNOLOGY CO., LTD.) 17 April 2013 (2013-04-17) <br> description, paragraphs [0004]-[0030], and figures 1-7 | 1-19 |
| A | CN 213692133 U (NINGDE CONTEMPORARY AMPEREX TECHNOLOGY CO., LTD.) 13 July 2021 (2021-07-13) <br> entire document | 1-19 |
| A | CN 206003896 U (DONGGUAN CITY JINGYI AUTOMATION EQUIPMENT CO., LTD.) 08 March 2017 (2017-03-08) <br> entire document | 1-19 |
| A | CN 102867992 A (SHENZHEN CITY GEESUN AUTOMATIZATION TECHNOLOGY CO., LTD.) 09 January 2013 (2013-01-09) <br> entire document | 1-19 |
| A | JP 07122264 A (SONY CORP.) 12 May 1995 (1995-05-12) <br> entire document | 1-19 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 August 2022** | **31 August 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/099571**

| Patent document cited in search report | | | Publication date (day/month/year) | Patent family member(s) | | | Publication date (day/month/year) |
|---|---|---|---|---|---|---|---|
| CN | 103050727 | A | 17 April 2013 | CN | 103050727 | B | 25 November 2015 |
| CN | 213692133 | U | 13 July 2021 | None | | | |
| CN | 206003896 | U | 08 March 2017 | None | | | |
| CN | 102867992 | A | 09 January 2013 | CN | 102867992 | B | 31 December 2014 |
| JP | 07122264 | A | 12 May 1995 | JP | 3460267 | B2 | 27 October 2003 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111007739